## Europäisches Patentamt
## European Patent Office
## Office européen des brevets

(19)

(11) Publication number: **0 155 555**
A2

(12)

# EUROPEAN PATENT APPLICATION

(21) Application number: **85102157.6**

(51) Int. Cl.⁴: **B 66 B 9/00**

(22) Date of filing: **27.02.85**

(30) Priority: **02.03.84 IT 4153884**

(43) Date of publication of application:
**25.09.85 Bulletin 85/39**

(84) Designated Contracting States·
**CH DE FR LI**

(71) Applicant   **F.A.I.V. S.r.l. Fabbricazioni Ausiliarie
Industriali Venete
Via Foscarini, 44
I-31040 Nervesa della Battaglia Treviso(IT)**

(72) Inventor   **Zanetti, Paolo
Via C. Battisti, 9
I-31015 Conegliano(IT)**

(72) Inventor:  **Ghirardo, Tiziano
Via XXV Aprile
I-31010 Moriago Della Battaglia(IT)**

(74) Representative:  **Modiano, Guido  et  al,
MODIANO, JOSIF, PISANTY & STAUB Modiano &
Associati Via Meravigli, 16
I-20123 Milan(IT)**

(54) **Conveyor type elevator including vertically travelling shelves.**

(57) The conveyor type elevator comprises vertically travelling support surfaces (21) for transporting trays (23) between rooms located on different or otherwise staggered floors. The end rods (19, 20) of the support surfaces (21) are associated with pairs of discrete and synchronous chains (6b, 7a), said chains forming two pairs of discrete loop paths, lying on parallel planes, which impart to the support surfaces (21) an unwinding motion from above downwards with respect to said horizontally laid plane, a horizontal traslatory motion with rewinding takes said support surface (21) back to the upper zone to resume the cycle.

./...

Fig. 2

"CONVEYOR TYPE ELEVATOR INCLUDING VERTICALLY TRAVELLING SHELVES"

The present invention has for its subject matter a conveyor type elevator formed by vertically travelling shelves, of the type used in cafeterias, restaurants or any other place where the effectuation of the transport of trays is sought between two rooms located on different or otherwise staggered locations.

Nowadays various types of conveyor type elevators are known: some comprise a structure of helical shape having, therefore, a definite inclination, on which the trays are made to slide.

Others, instead, translate vertically. such prior conveyor type elevators compulsorily avail themselves of complicated linkage systems.

Such known devices, therefore, are not devoid of shortcomings, the main one being associated with the technical difficulty of achieving good synchronization, in the instance of conveyor type elevators operating in a vertical plane, and inherent problems associated with overall structural dimensions in the other instance.

The primary aim of the present invention is that of solving such technical problems by devising a conveyor type elevator including vertically travelling shelves for transporting trays between floors located at different heights.

A further important object is that of providing an elevator type conveyor which effects the transport of trays without inducing the upsetting of dishes, bottles, glasses and other objects placed on the tray.

A consequent primary object is that of holding said tray on a single horizontal plane.

Another object is that of obtaining an elevator type conveyor which conveys the trays in a continuous fashion.

Another object consists of devising an elevator type conveyor wherein the exact location of the trays placed thereon is previously preset and automatically controlled.

Another object consists of devising an elevator type conveyor which positions movable objects placed on the tray at a central zone thereof.

Another object is that of providing an elevator type conveyor the operation whereof is not jeopardized by any spillage of liquids contained in containers placed on the tray.

Another important object is that of providing an elevator type conveyor of compact dimensions.

A not unimportant object is that of providing an elevator type conveyor, including vertically travelling shelves of low cost, and implementable with usual plant.

These and other objects are achieved by an elevator type conveyor including vertically travelling shelves, characterized in that it comprises a plurality of support shelves composed of flanking rods hinged together on long sides defining a substantially rectangular shelf, the ends of the two end rods, of different length, being associated respectively with first and second remote pairs of similar chain loops, said loops lying on parallel planes at a distance equal to the corresponding one of the end rods, said loop pairs both describing a substantially L-like path, the second having a major longitudinal extension wing equal to the corresponding one of the support shelves.

Further features and advantages will be apparent from the detailed, but not exclusive, description of a particular embodiment of a device according to the invention, illustrated by way of example, but not of limitation, in the accompanying drawings, where:

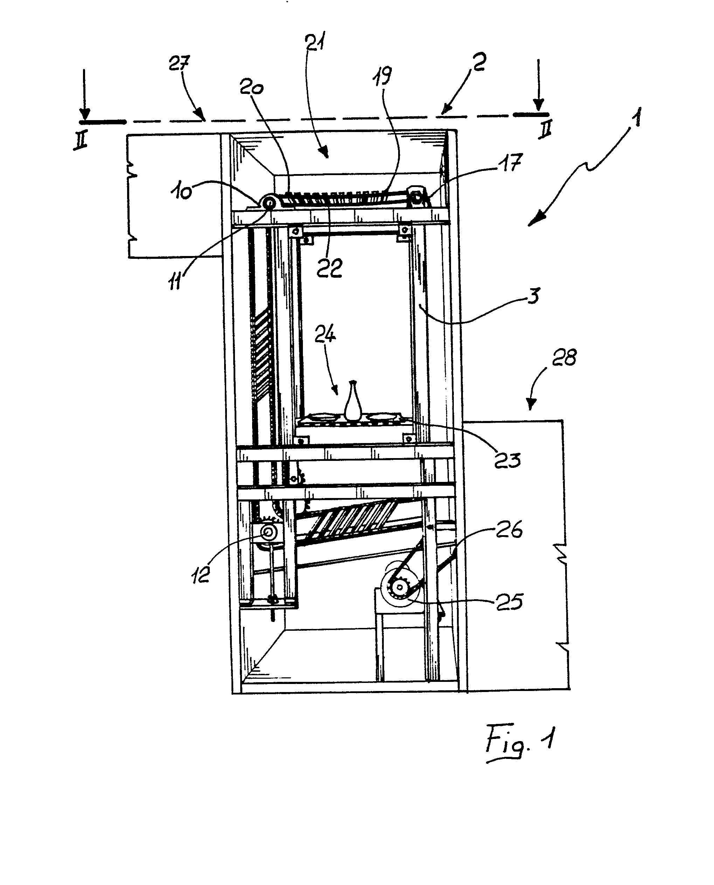

Fig. 1 is a front view of the downward transport:

Fig. 2 is a view in the sectional plane II-II of Fig. 1:

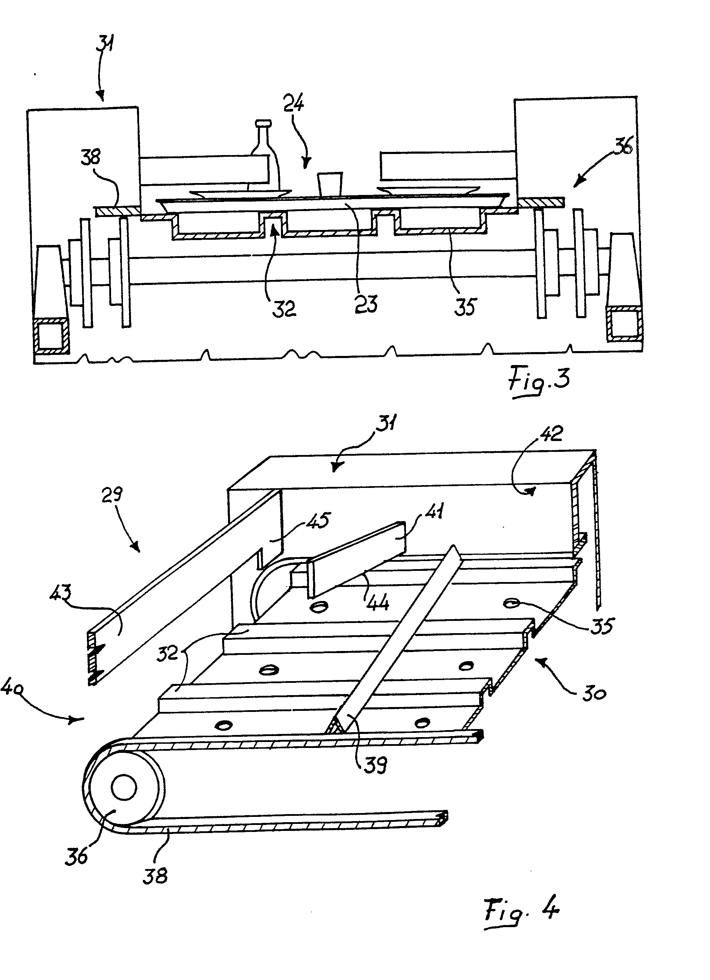

Fig. 3 shows a part-sectional cut-away view of the sectioned front of the conveyor type elevator:

Fig. 4 is a fragmentary three-quarter view of a conveyor type elevator:

Fig. 5 is a schematic view of the transmission systems of the conveyor type elevator; and

Fig. 6 diagrammatically illustrates a further schematic view of the transmission systems of the conveyor type elevator in which the dimensional proportions have been altered for the sake of clarity.

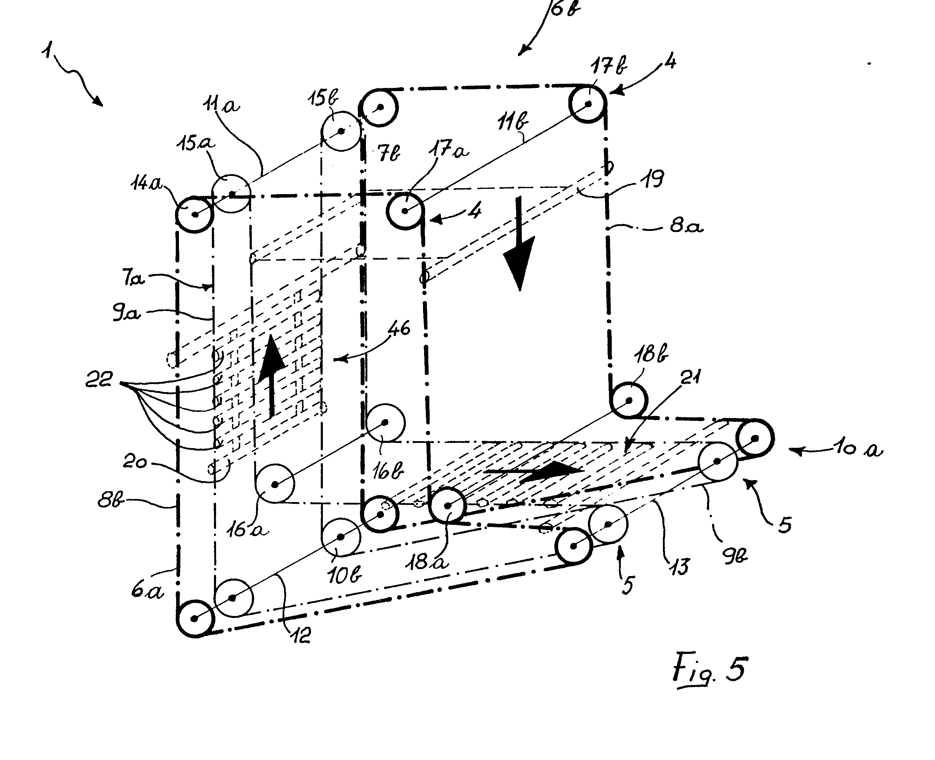

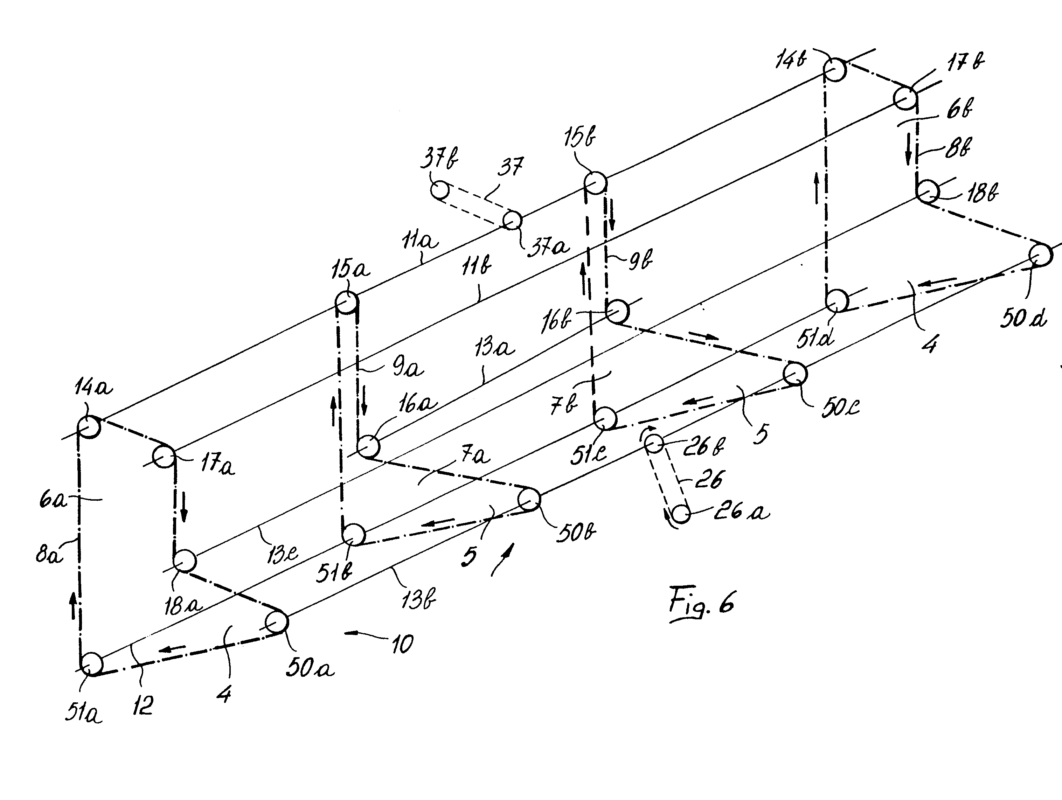

With reference to the previously cited figures, the conveyor type elevator 1 is enclosed in a parallelepipedal box-like structure 2 having on its interior a metal frame 3 supporting two synchronously driven transmission systems 4 and 5 (Figs. 5 and 6) each including a pair 6,6a, 7,7a of closed loop formations 6a,6b and 7a,7b defined, respectively, by the chain runs 8a,8b and 9a,9b.

Each of the two transmission systems 4 and 5 has a plurality of pinions 10 mounted on first 11a and second 11b upper axes, first 13a, second 13b, and intermediate 13c lower axes and a lowermost axis 12 said upper axes 11a,11b being located on a different horizontal plane to said lower axes 13a,13b,13c (the latter, in turn being located on a different horizontal plane to that containing said lowermost axis 12), said plurality of pinions 10 in turn being placed on said axes 11a-13c to define parallel planes orthogonal to those of lay of the axes, for chains 8a,8b,9a and 9b.

Said plurality of pinions 10 including a pair of pinions 14a,14b, mounted at the ends of said first upper axis 11a in cooperation with chain runs 8a,8b respectively.

A pair of pinion wheels 15a,15b similar to said pair of pinions 14a,14b are similarly mounted on said first upper axis 11a for cooperation with the chains 9a and 9b, said pair of pinion wheels 15a,15b being positioned, on two parallel planes orthogonal to the lay of the axes at an equal distance from the pinions 14a,14b, interposed therebetween.

A pair of sprocket wheels 16a,16b identical to the pinion wheels 15 in diameter and distance between centers, is placed on the first lower axis 13a, parallel to said first upper axis 11a in the same vertical planes, as those comprising the pair of pinion wheels 15a,15b, and spaced therefrom at a horizontal distance equal to the outside diameter of the pinion wheel and spaced vertically therefrom at a distance defining the extent of travel. of trays to be conveyed, in a horizontal condition.

A pair of sprockets 50b,50c mounted on said second lower axis 13b are also comprised in the same vertical planes as the sprocket wheels 16a,16b. Said second lower axis 13b being vertically spaced from said first lower axis 13a by a distance equal to the external diameter of said sprocket wheel.

In turn, a pair of gear wheels 51b,51c, mounted on said lowermost axis 12 are comprised in the same vertical planes, comprising the sprockets 50b,50c lying orthogonally to said parallel planes containing said axes 11a-13c.

Said pinion wheel 15a, sprocket wheel 16a, sprocket 50b, and said gear wheel 51b all cooperating with said chain 9a.

Similarly, said pinion wheel 15b, sprocket wheel 16b, sprocket 50c and said gear wheel 51c all cooperating with said chain 9b.

Thus there is created a first or inner pair of loops 7a and 7b of chains 9a and 9b defining closed loop configurations having a substantially "L"-like shape disposed on two parallel planes interposed between two parallel planes containing the outer pair of chains 8a,8b similarly, a pair of toothed wheels 17a,17b similar to the pinions 14a,14b in diameter and distance between centers, are placed on the second upper axis 11b lying in the same vertical orthogonal planes to the planes of lay of the axes 11a-13c, this time at the same height as the pinions 14a-14b but spaced at a distance therefrom many times greater than the outside diameters of the toothed wheels 17a-17b themselves.

Another pair of gears 18a-18b, similar to the toothed wheels 17a,17b in diameter and distance between centers, is mounted on the intermediate lower axis 13c and is placed on the same vertical, parallel planes, as the cited toothed wheels 17a,17b lying orthogonally to the planes of lay of the axes 11a-13c, said intermediate lower axis 13c being located on the same horizontal plane as said first lower axis 13a, said gears 18a,18b being horizontally spaced from the toothed wheels 17a,17b by a distance equal to their outside diameter, and being vertically disposed at the same height as the sprocket wheels 16a,16b.

A pair of sprockets 50a,50d mounted on said second lower axis 13b are also comprised in the same vertical plane as the gears 18a,18b. In turn, a pair of gear wheels 51a,51d mounted on said lowermost axis 12 are comprised in the cited vertical planes comprising the gears 18a.18b, lying orthogonally to said parallel planes containing said axes 11a-13c.

Said pinion wheel 14a, toothed wheel 17a, gear 18a, sprocket 50a and said gear wheel 51a, all cooperating with said chain 8a, Similarly, said pinion 14b, toothed wheel 17b, gear 18b, sprocket 50d and said gear wheel 51d, all cooperate with said chain 8b.

Thus there is created a second pair of loops 6a and 6b of chains 8a and 8b of substantially "L"-like shape disposed on two planes parallel to each other and with respect to the corresponding planes defined by the first pair of loops 7a and 7b, the first pair of loops 7a,7b being interposed between the second pair of loops 6a,6b. To the chain runs 8a,8b,9a,9b there are linked, respectively, rods 19 and 20 disposed, in their movement from above downwards, positioned parallely to the planes of lay of the axes 11a-13c and having a length equal to the relative distance between the vertical planes of lay of the chains 8a,8b and 9a,9b, the latter distance being greater between the loop pair 6a,6b than between the loop pair 7a,7b.

Between the rods 19 and 20, there is formed a support surface 21 constructed by hingedly connecting thereto, together, on the long sides, several rods 22 equal to and flanking the 20, up to the rod 19 included.

The number of such support surfaces 21 is a function of the level difference to be spanned and in any case is, at the most, such as to allow for a space between two of them, consecutive and parallel in their motion of vertical translation, equal to the space required for inserting a tray 23 with the related objects 24, their overall width being accordingly at least equal to that of such trays 23.

Actuation of the downward transport is accomplished through the use of a single motor 25 which, in the particular embodiment considered, is located in the lower portion of the box-like structure 2, is electrical, and through a belt or chain 26 trained around drive gear wheels 26a,26b, rigidly associated with said motor 25 and said second lower axis 13b respectively, rotatively drives said second lower axis 13b.

By virtue of the fact that the sprocket wheels 16a,16b, the toothed wheels 17a,17b and the gears 18a,18b are idly mounted on their respective axes, and the pinions 14a,14b and the pinion wheels 15a have the same axis, the motion of the loop pairs 6 and 7 is synchronous.

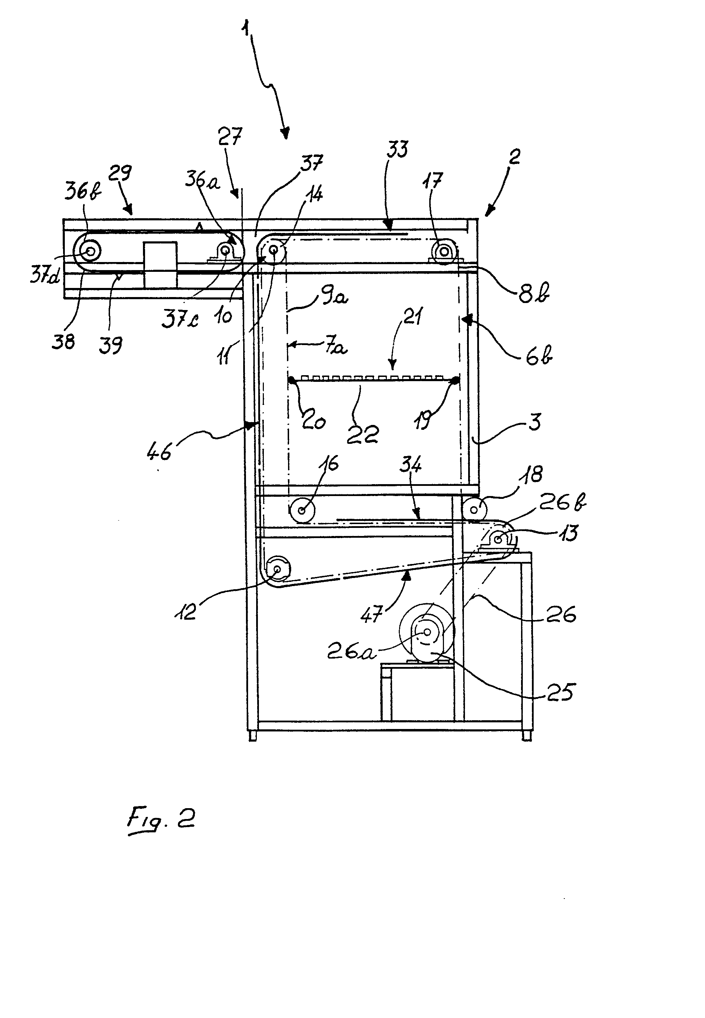

The downward transport 1 has at the top an input zone 27 and at the bottom an output zone 28 which is flanked by conveyors 29 which have a support surface 30 bound by two side walls 31 for the trays 23 formed by two guides of stainless steel 32, parallel, disposed longitudinally, to a and defining a substantially "C" shaped cross-section; said guides 32 are placed at the same height and parallelly to an upper horizontal plane 33 defined by the two loop pairs 6 and 7 (Fig.2), the support surface 30 having a slightly wider width dimension than an ordinary tray 23 and having holes 35 for the underlying collection of the fluids.

Such conveyors 29 extend longitudinally and have, at each end thereof, a pair of pinions 36a-36b, similar to the pinions 10, placed in the zone 27, said pinions 36a,36b being adapted to rotate synchronously with the pinions 14a,14b being connected thereto through the first upper axis 11a by means of a chain 37 and sprockets 37a,37b mounted on respective axes 37c,37d, lying parallel to said upper axes 11a,11b.

Such pinions 36 each drive a belt 38, located at approximately the same height as the guides 32 inwards of the walls 31, whereto there is linked a steel rod 39 with triangular cross-section, the height whereof is slightly higher than the corresponding height of the tray 23 and arranged perpendicular to the longitudinal axis of the guides 32.

The conveyor 29 located in the input zone 27 also has, in the proximity of the end 40, a first parallelepipedal rod 41 of metal located on the inner side edge 42 of the walls 31 slightly inclined, with respect to the rod 39, in the direction of the end 40 and the overall dimensions whereof are such as to occupy a part of the zone directly overlying the tray 23.

Proximate to the end 40 of the conveyor 29 there is located a second parallelepipedal rod 43, disposed transversely to the guides 32 connecting the two side edges 42 and perpendicular thereto, which has, at the height of the lower edge 44 of the rod 41, a projection 45 occupying, transversely, the zone overlying the peripheral edge of the tray 23.

The operation of the conveyor type elevator is as follows:

the motor 25 through drive gear wheels 26a,26b and chain 26 drives rotatively the gears sprockets 50a-50d located on the second lower axis 13b, which resultantly drives both the loop pair 6 and 7.

The rods 19 and 20, the ends whereof are rigid with the chains 6a,6b and 7a,7b, respectively, mark accordingly the path unwound by the same, which is L-like for both, the sole difference being that the loop pair 7 is placed parallely to and inside the pair 6, the latter having a greater horizontal extension of the upper run 33.

The rods 22, arranges itself in the following ways: from the rear position 46 it is disposed vertically, whilst, on reaching the gears 14 and 15 it begins to rotate and arrange itself horizontally, following the rod 19 along the upper horizontal run 33.

During the longitudinal extension of the support surface 21 equal to the horizontal extension of the upper run 33 of the pair of loops 6, the rods 19 and 20 simultaneously affect the pinion wheels 15a,15b and the toothed wheels 17a,17b, this allowing, on account of the synchronous motion of the pairs 6 and 7 of loops, the horizontal support surface 21, to undergo a successive vertical motion through horizontal planes parallel to the upper horizontal plane 33.

This continues until the rods 19 and 20 simultaneously affect the gears 18a,18b and the sprocket wheels 16a,16b, respectively: the latter being disposed on the same horizontal plane 34 (Fig.2) defined by the chain pairs 6a,6b and 7a,7b a rectilinear motion with horizontal lay perpendicular the upward motion indicated in the position 46.

The rod 19, on reaching the sprockets 50a,50d placed on the second lower axis 13b, follows the path defined by the run of the chains 6a and 6b in their path 47 (Fig. 2) toward the gear wheels 51a,51d placed on the lowermost axis 12, a similar path being followed by the rod 20 relatively to the sprockets 50b,50c and gear wheels 51a,51d placed on the same axes 13b, 12 until the upward motion described initially begins once again.

The conveyors are driven, at the upper inlet zone 27, by the pinions 14a,14b, adjusting the position of the rod 39 such as to make the tray 23 affect the upper horizontal run 33 simultaneously with the unwinding of the support surface 21 thereon, and at the output zone 28, by the sprockets 50a-50d placed on the second lower axis 13b, adjusting the rod of the lower conveyor such as to push the tray once it has been fully ejected from the lower run 34.

The holes 34 on the surface 30 are provided to drain any liquids spilled thereon, the rod 41 conveys, owing to its oblique disposition, the projecting objects 24 toward the center of the tray 23, while the rod 43 serves to define the maximum height permitted for the objects 24.

The projections 45 have instead the task of preventing any second tray from being placed on top of the first, while the rod 39 also has the purpose of disposing a tray accidentally placed obliquely on top of it, thus causing it to strike the rods 41 which force it to assume the right position on the guides 32.

The advantages are, therefore, having provided a conveyor type elevator which conveys, in a continuous fashion, trays between floors at different heights.

Another advantage is connected with the provision of a chain loop assembly which impart to the tray support surface a motion from above downwards, this contributing to avoid upsetting dishes, bottles, glasses or other objects placed on the tray.

A further advantage, moreover, is the provision of a conveyor which correctly positions a tray placed thereon, prior to its introduction into the downward transport, in an automatic fashion, preventing fully or partly overlapping trays from being inserted, disposing at the center any bottles or glasses and preventing an object from passing which moves past a preset position.

Such conveyors, moreover, are provided with a liquid drain system, the downward transport structure, lastly, being compact and with held down overall dimensions.

The invention so conceived is susceptible to many modifications and variations, all of which fall within the scope of the inventive concept, all of the details being replaceable with other technically equivalent elements.

## CLAIMS

1. A conveyor type elevator characterized in that it comprises a plurality of supporting members having a support surface (21) and conveyor means (6a,6b, 7a,7b) supporting said supporting members in a travelling position in which said supporting surface (21) thereof is horizontal, said conveyor means having a vertically travelling portion for conveying said supporting members in a vertical direction and having a horizontally travelling portion for conveying said supporting members in a horizontal direction, thereby to allow said supporting members to follow an "L"-like path.

2. A conveyor type elevator (1) characterized on that it comprises a plurality of support surfaces (21) composed of flanking rods (22) hinged together on long sides defining a substantially rectangular support surface (21), the ends of the two end rods (19,20), of different length, being associated respectively with first and second discrete pairs of similar cnain loops (6a,6b, 7a,7b), said loops (6a,6b, 7a,7b) lying on parallel planes at a distance corresponding to the length of the end rods (19,20), said loop pairs (6a,6b, 7a,7b) describing both a substantially "L"-like path, the second (7a,7b) having a major longitudinal extension wing equal to the corresponding one of the support surfaces (21).

3. A conveyor type elevator (1) according to Claim 2, characterized in that it is enclosed in a parallelepipedal box-like structure (2) having on its interior a metal frame (3) supporting two discrete synchronously driven systems (4,5) each comprising a pair of discrete loops (6a,6b, 7a,7b) located on parallel planes formed by chain runs (8a,8b, 9a,9b) engaged with a plurality of pinions (10) disposed on the same planes of lay as the loops (6a,6b, 7a,7b), said systems (4,5) having common axes (11a,12,13b), an upper one (11a) and two lower ones (12,13b), the latter being disposed on mutually parallel planes to define an intermediate lower plane, orthogonal to the planes of lay of the loops (6a,6b, 7a,7b) said loop pairs (6a,6b, 7a,7b) belonging to four discrete planes parallel and mirror-image to one another, the two outermost forming the first pair of loops (6a,6b), the two innermost the second (7a,7b).

4. A conveyor type elevator according to Claims 2 and 3, comprising two pairs of loops (6a,6b, 7a,7b) having three common axes (11a,12,13b), characterized in that each have at the ends a first pair of gears (14a,14b, 51a,51d, 50a,50d), a second pair of gears (15a,15b, 51b,51c, 50b,50c), similar to the first, being placed on the distance between centers at an equal distance from the first, a first drive system (4) being composed, in addition to the first gear pairs, of two more similar pairs of similar gears (17a,17b, 18a,18b), having the same distance between centers, at the same height as the first upper pair (14a,14b), but at a horizontal distance therefrom which is many times longer than their outside diameters, the other (18a,18b) placed at a horizontal distance from the former (17a,17b) which is equal to one outside diameter and vertically at a distance from the second lower axis (13b) again equal to one outside diameter.

5. A conveyor type elevator according to Claims 2, 3 and 4, comprising two pairs of loops (6a,6b, 7a,7b) having three common axes (11a,12,13b) provided each with two pairs (14a-15b, 50a-51c) of similar gears, the second (15a,15b, 51b,51c, 50b,50c), placed on the distance between centers, being characterized in that it realizes a second drive system (5) in conjunction with another similar pair of similar gears (16a,16b), having the same distance between centers. placed at a horizontal distance from the upper pair and at a vertical distance from the lower intermediate pair equal, in both cases to the outside diameter of the gears.

6. A conveyor type elevator according to the preceding Claims, characterized in that it comprises a first rigid rod (19) associated at the ends with the chains forming the first pair (4) of loops (6a,6b) and disposed perpendicularly to the lay thereof. a second rigid rod (20) being associated at the ends with chains (7a,7b) forming the second loop pairs (5), disposed perpendicularly to the lay thereof and at the same height as the first rigid rod in their synchronous motion from above downwards. at said run said two rods (19,20) lying on a horizontal plane perpendicular to the lay of the loop (6a,6b, 7a,7b) planes.

7. A conveyor type elevator according to Claims 2 and 6, characterized in that it comprises a plurality of similar support surfaces (21), separated from one another, each being formed by hingedly connecting on the long sides of the first (19) and to the second (20) rigid rods a plurality of rigid rods (22), likewise hingedly connected to one another, of equal dimensions to the corresponding one of the second rod (20) the number whereof is such as to define a horizontal plane between said first (19) and second (20) rods in their motion from above downwards, said surface (21) supporting a food carrier (23) of a known type.

8. A conveyor type elevator according to Claim 2, characterized in that it has a single motor (25) driving the two drive systems (4,5) synchronously through a chain or belt (26) acting on one gear thereof (26a), said preferably electric motor (25) being located below such drive systems (4,5), within the box-like structure (2).

9. A conveyor type elevator according to Claim 2, characterized in that it has an upper tray inlet zone (27) and lower ejection zone (28) which is flanked by conveyors (29) which have a support surface (30) for the trays (23) overlaid by at least two like parallel steel guides (32) disposed longitudinally, of box-like shape, said guides (32) being placed at the same height and parallel to the lower and upper horizontal planes of the two loop pairs (6a,6b, 7a,7b), said plane having a plurality of holes (35) for collecting underlying fluids, said conveyors (29) having laterally two walls (31) within each of which runs a belt (37) the motion whereof is ensured by synchronous gears (14) with the dual drive system of the conveyor, to said belt there being connected a cross pusher (39) composed of a triangular cross-section metal rod, of a greater height than the corresponding one of the tray (23) and slightly sliding above the guides.

10. A conveyor type elevator according to Claims 2 and 9, which is flanked by a conveyor (29) bound laterally by two walls (31), characterized in that it has, in the proximity of the end facing the inlet zone a first rod (41), set crosswise, associated with the walls (31), with respect to them perpendicular, of maximum height for the objects contained in the tray (23), said rod (43) having in the proximity of the side walls (31) a lower projection (45) affecting the zone overlying the peripheral edge of the tray (23), on each said wall (31) there being also located a second cross rod (41), inclined at an acute angle on the direction of the inlet zone (27), only affecting a part of the zone overlying the tray (23) and otherwise having a height in conjunction with the lower projection of the first rod (43) slightly greater than that of the cross pusher.

*Fig. 1*

*Fig. 2*

31

24

38

36

32 23 35

*Fig.3*

31

42

29

45 41

43

44

35

32

30

40

39

36

38

*Fig. 4*

Fig. 5

Fig. 6